# EUROPÄISCHE PATENTSCHRIFT

(11) **EP 1 741 252 B1**
(45) Veröffentlichungstag und Bekanntmachung des Hinweises auf die Patenterteilung: **31.10.2007**
(21) Anmeldenummer: 05729829.1
(22) Anmeldetag: 16.03.2005
(51) Int. Cl.: H04L 12/66

(54) **VEFAHREN ZUR ZUORDNUNG EINER ANZAHL VON M TEILNEHMERSEITIG ANGEORDNETEN DATENVERBINDUNGEN ZU EINER ANZAHL VON N TRANSPORTSEITIG ANGEORDNETEN DATENVERBINDUNGEN**
METHOD FOR ASSIGNING A NUMBER OF M DATA LINKS LOCATED ON THE SUBSCRIBER SIDE TO A NUMBER OF N DATA LINKS LOCATED ON THE TRANSPORT SIDE
PROCEDE POUR AFFECTER UN NOMBRE DE M LIAISONS DE DONNEES COTE ABONNE A UN NOMBRE DE N LIAISONS DE DONNEES COTE TRANSPORT

(30) Priorität: 26.04.2004 DE 102004020288
(43) Veröffentlichungstag der Anmeldung: 10.01.2007
(73) Patentinhaber: NOKIA SIEMENS NETWORKS GMBH & CO. KG, 81541 München (DE)
(72) Erfinder: NEUHÄUSLER, Chlodwig, 82237 Wörthsee (DE)
(74) Vertreter: Fischer, Michael
(86) Internationale Anmeldenummer: PCT/EP2005/002771
(87) Internationale Veröffentlichungsnummer: WO 2005/104468

(56) Entgegenhaltungen:
- US-A- 5 946 313
- US-B1- 6 393 506
- US-B1- 6 553 020

## Beschreibung

Die Erfindung bezieht sich auf ein Verfahren zur Zuordnung einer Anzahl von M teilnehmerseitig angeordneten Datenverbindungen, insbesondere ATM-Verbindungen, zu einer Anzahl von N transportseitig angeordneten Datenverbindungen, wie zum Beispiel Ethernet-Verbindungen.

Im besonderen in Ethernet-Netzwerken, hauptsächlich im WAN-Bereich (WAN = Wide Area Network), kommen vermehrt Netzwerkelemente zum Einsatz, die untereinander mittels N paralleler (gebündelter) Ethernetleitungen verbunden sind. Diese Ethernetleitungen arbeiten in der Regel jeweils im fullduplex mode und mit derselben Datenrate. Die dabei erforderliche Bündelung der N-Datenströme in Empfangsrichtung und die Aufteilung in N-Datenströme in Senderichtung übernimmt das jeweilige Netzwerkelement (z.B. ein Router oder ein Switch).

Dieser Ansatz bietet zahlreiche Vorteile gegenüber einer singulären Verbindung. Es ergibt sich eine erhöhte Ausfallsicherheit der Gesamtverbindung, was sich positiv auf deren Verfügbarkeit auswirkt. Im Fall des Ausfalls einer der N Verbindungen ist es möglich, den Datenstrom über die verbleibenden N-1 Verbindungen zu übertragen. Weiter ergibt sich ein Kostenvorteil gegenüber einer hochbitratigen Einzelverbindung. Die Installation von N Verbindungen mit einer jeweiligen Datenrate D ist häufig günstiger als die Installation einer Einzelverbindung mit der Datenrate N x D. Darüber hinaus können in bestehenden Netzen erhöhte Bandbreiten realisiert werden, weil vielfach bereits parallele Netzwerke oder Verkabelungen existieren, die bisher nur als Einzelverbindungen genutzt worden sind. Mit der Möglichkeit der Bündelung von Datenströmen kann daher die bestehende Infrastruktur (Verkabelung) beibehalten, aber die darüber abgewickelte Datenrate erhöht werden. Eine zusätzliche Option besteht bei dieser Lösung weiter dahingehend, dass die Datenrate einer Verbindungsstrecke durch eine optionale Hinzunahme weiterer Verbindungsleitungen in Schritten an das tatsächliche Datenverkehrsaufkommen angepasst werden kann. So kann hierdurch der Vorteil erzielt werden, bei einem Engpass in der Übertragungskapazität nicht auf die nächste Generation des Verbindungsstandards (z.B. 100Base-T auf 1000Base-T) umsteigen zu müssen, sondern es kann in kleineren Schritten bedarfsgerecht eine Anhebung der Datenratenkapazität erzielt werden.

Dieser Ansatz der besseren Ausnutzung der bestehenden Infrastruktur findet sich nun auch zunehmend im Bereich der sogenannten Ethernet DSLAMs (DSLAM - Digital Subscriber Line Access Multiplexer) Anwendung. In Richtung zum Backbone-Netz (im folgenden als upstream-Datenverkehr bezeichnet) terminieren derartige DSLAM's einen eingehenden ATM Datenverkehr und leiten die darin enthaltenen Ethernet-Datenrahmen über eine der N Ethernet-Schnittstellen zu einem Router weiter. In Richtung zum Teilnehmer (im folgenden als downstream-Datenverkehr bezeichnet) werden die ankommenden Ethernet-Rahmen unabhängig von der Schnittstelle ihrer Herkunft, anhand ihrer Ziel MAC Adresse der hierzu gehörigen ATM Verbindung zugeordnet, in AAL5 Rahmen verpackt und als ATM Datenverkehr zu dem gewünschten Adressaten (Teilnehmer) weitergeleitet. Der DSLAM erfüllt damit eine Brückenfunktion zwischen ATM Schicht und Ethernet Schicht (ATM to Ethernet Bridge).

Damit besteht für den downstream-Datenverkehr anhand einer Zuordnungstabelle (MAC Adressen zu ATM Verbindungen) eine klare Zuordnung, wie die ursprünglichen Ethernet Rahmen an den Teilnehmer geleitet. Diese Aufgabe ist damit für alle Ethernet DSLAM's unabhängig von der Anzahl der verfügbaren transportseitigen Ethernetschnittstellen gleich.

Bisher ungelöst ist diese Thematik für den upstream-Datenverkehr, der beispielsweise über die zur Verfügung stehenden Ethernet-Schnittstellen transportseitig zum Backbone Netz befördert werden muss. Problematisch kann es hierbei sein, dass im Falle des Ausfalls einer Ethernet Schnittstelle aufgrund eines Defekts oder auch nach einer administrativ eingeleiteten Deaktivierung einer Schnittstelle die bisher dieser Ethernet Schnittstelle zugeordneten teilnehmerseitigen ATM Verbindungen in einer geeigneten Weise wieder transportseitig angebunden werden müssen, damit es nicht zu einem Unterbruch eines möglicherweise gerade abgewickelten Datenverkehrs kommt. Umgekehrt besteht natürlich auch das Bedürfnis nach erfolgreicher Reaktivierung einer deaktivierten Ethernet Schnittstelle dieselbe möglichst schnell wieder in Betrieb zu nehmen und in den Datenaustausch einzubinden.

Die Patentschrift US-B1-6553020 erzielt dies durch Vorgabe von statischen Gewichtungswerten für bestimmte Konfigurationen zwischen aktiven und stillgelegten Leitungen.

Der Erfindung liegt daher die Aufgabe zugrunde, ein Verfahren für das Management des upstream-Datenverkehrs zwischen teilnehmerseitig angeordneten Verbindungen, wie z.B. ATM Verbindungen, und den transportseitig angeordneten Datenverbindungen, wie z.B. Ethernet Interfaces, anzugeben, mit dem die zur Verfügung stehenden Netzwerkresourcen besonders effizient und unterbruchsfrei genutzt werden können.

Die Aufgabe wird erfindungsgemäss durch ein Verfahren zur Zuordnung einer Anzahl von M teilnehmerseitig angeordneten Datenverbindungen, insbesondere ATM-Verbindungen, zu einer Anzahl von N transportseitig angeordneten Datenverbindungen, insbesondere Ethernet Interfaces, gelöst, bei dem:
a) jede der M teilnehmerseitig angeordneten Datenverbindungen anfänglich einer der N transportseitig angeordneten Datenverbindungen zugewiesen wird;
b) für jede der N transportseitig angeordneten Datenverbindungen dynamisch ein die tatsächlich mögliche Auslastung repräsentierender Gewichtungswert bestimmt wird, wobei der Gewichtungswert aus der Anzahl der zugewiesenen teilnehmerseitig angeordneten Datenverbindungen und/oder der aktuell über die transportseitig angeordnete Datenverbindung abgewickelten Datenlast berechnet wird; und
c) die bereits zugewiesenen und/oder neuen teilnehmerseitig angeordneten Datenverbindungen in Abhängigkeit von den Gewichtungswerten auf die verfügbaren transportseitig angeordneten Datenverbindungen zugewiesen werden.

Auf diese Weise werden die teilnehmerseitig angeordneten Datenverbindungen zunächst einmal nach empirischer Erfahrung den transportseitig angeordneten Datenverbindungen zugeordnet, um beispielsweise eine gleichmässige Auslastung der transportseitig angeordneten Datenverbindungen zu erzielen. Mit transportseitig angeordneter Datenverbindung ist im Kontext der vorliegenden Erfindung vor allen Dingen auch die Datenschnittstelle gemeint, über die der Datenverkehr vom Teilnehmer zum Backbone Netz abgewickelt wird, also zum Beispiel eine Ethernet Schnittstelle. Anhand der Berechnung des Gewichtungswertes kann damit eine Aussage über den tatsächlichen bereits abgewickelten Datenverkehr bzw. eine Voraussage über einen möglicherweise auf der aktuellen Zuordnung auftretenden Datenverkehr getroffen werden, so dass die zur Verfügung stehenden Schnittstellen mit ihren transportseitig angeordneten Datenverbindungen zum Backbone Netz möglichst gleichmässig und ggfs. mit einer komfortablen Reserve ausgestattet ausgelastet sind.

Für die Bildung des Gewichtungswertes kann es sicher verschiedene auf empirischen Erfahrungen beruhende Strategien geben. Eine die tatsächlichen Zusammenhänge sehr gut wiederspiegelnde Strategie kann es vorsehen, dass zur Berechnung des Gewichtungswertes die aktuelle Datenlast stärker betont wird als die theoretisch aufgrund der zugewiesenen Anzahl teilnehmerseitig angeordneter Verbindungen mögliche Last. Hierbei kann zum Beispiel die aktuelle Datenlast quadratisch in den Gewichtungswert eingehen. Es sind aber natürlich auch andere Gewichtungsabhängigkeiten möglich.

In zweckmässiger Weiterbildung der Erfindung kann eine neu anzulegende teilnehmerseitig angeordnete Datenverbindung der transportseitig angeordneten Datenverbindung zugewiesen wird, welche den geringsten Gewichtungswert aufweist. Damit wird zunächst die transportseitig angeordnete Datenverbindung genutzt, die aufgrund ihres Gewichtungswertes die grössten Auslastungsreserven aufweist. Sollten alle transportseitig angeordneten Datenverbindung in etwa gleiche Gewichtungswerte aufweisen, muss eine Reihenfolge für die diesbezügliche Zuordnung festgelegt werden, also zum Beispiel zunächst die Verwendung der transportseitig angeordneten Datenverbindung mit dem ersten Zählindex. Es sind aber auch eine Zuordnungen denkbar, bei denen zunächst die Datenverbindung ausgewählt wird, die beispielsweise am leichtesten auf einen höheren Übertragungsstandard umschaltbar ist.

Eine weitere zweckmässige Ausgestaltung der Erfindung kann es vorsehen, bei Ausfall einer transportseitig angeordneten Datenverbindung eine Umverteilung der dieser ausgefallenen Datenverbindung zugewiesenen teilnehmerseitig angeordneten Datenverbindungen in Abhängigkeit der für die verbleibenden transportseitig angeordneten Datenverbindungen berechneten Gewichtungswerte vorzunehmen. Damit gilt auch hier im Grunde das voranstehend Gesagte für die Verteilung der benötigten Übertragungsrate auf die verfügbaren transportseitig angeordneten Datenverbindungen. Auch das Zuordnungsverfahren kann nach den bereits oben erläuterten Kriterien erfolgen.

Für den Fall der Reaktivierung einer deaktivierten transportseitig angeordneten Datenverbindung ist ebenfalls eine Vorgehensweise nach dem im Grunde schon bekannten Schema vorteilhaft. Bei Hinzutreten einer transportseitig angeordneten Datenverbindung wird deshalb eine teilweise Umverteilung der den bisher verfügbaren transportseitig angeordneten Datenverbindungen zugewiesenen teilnehmerseitig angeordneten Datenverbindungen in Abhängigkeit der für die transportseitig angeordneten Datenverbindungen berechneten Gewichtungswerte vorgenommen. Das heisst im Detail, dass zunächst die transportseitig angeordneten Datenverbindungen mit den höchsten Gewichtungswerten entlastet und von diesen teilnehmerseitig angeordneten Datenverbindung auf die neu hinzugetretene transportseitig angeordnete Datenverbindung umrangiert werden.

Eine bedarfsgerechte Berücksichtigung der Anzahl der zu einer transportseitig angeordneten Datenverbindung zugewiesenen teilnehmerseitig angeordneten Datenverbindungen bei der Berechnung des Gewichtungswertes ergibt sich, wenn sich der Gewichtungswert hinsichtlich der einer transportseitig angeordneten Datenverbindung zugewiesenen teilnehmerseitig angeordneten Datenverbindungen linear mit der Anzahl der zugewiesenen teilnehmerseitig angeordneten Datenverbindungen verhält.

Eine bedarfsgerechte Berücksichtigung des über eine transportseitig angeordnete Datenverbindung abgewickelte Datenlast bei der Berechnung des Gewichtungswertes ergibt sich, wenn zur Berechnung des Gewichtungswerts hinsichtlich der über eine transportseitig angeordnete Datenverbindung abgewickelte Datenlast eine normierte zeitlich gemittelte Datenrate mit einer vorbestimmbaren Länge eines zurückliegenden Abfrageintervalls bestimmt wird. Aufgrund der zeitlichen Mittelung werden kurzfristige Schwankungseffekte unterdrückt, wodurch der transportseitig angeordneten Datenverbindung eine Datenrate mit einer vorbestimmbaren Reservekapazität zugewiesenen werden kann, sodass eben doch kurzfristig erhöhte Datenraten übertragen werden können.

Um im Grunde das Gefahrenpotential auch einer aktuell im Leerlauf befindlichen teilnehmerseitig angeordneten Datenverbindung bei der Berechnung des Gewichtungswertes angemessen mitberücksichtigen zu können, kann es vorgesehen sein, zur Berechnung des Gewichtungswerts hinsichtlich der über eine transportseitig angeordnete Datenverbindung abgewickelten Datenlast für eine aktuell nicht-benutzte teilnehmerseitig angeordnete Datenverbindung einen von Null verschiedenen unteren Gewichtungsbeitrag zum Gewichtungswert anzusetzen.

Weiter kann es vorgesehen sein, dass der hinsichtlich der über eine transportseitig angeordnete Datenverbindung abgewickelten Datenlast ermittelte Beitrag zum Gewichtungswert und der hinsichtlich der Anzahl der einer transportseitig angeordneten Datenverbindung zugewiesenen teilnehmerseitig angeordneten Datenverbindungen ermittelte Beitrag zum Gewichtungswert mit unterschiedlichem Gewicht in die Ermittlung des (Gesamt-) Gewichtungswertes eingehen. So kann beispielsweise der lastabhängige Beitrag zu zwei Dritteln und der rein numerische Beitrag der zugewiesenen teilnehmerseitig angeordneten Datenverbindungen zu einem Drittel in den Gesamt-Gewichtungswert eingehen.

Weitere vorteilhafte Ausgestaltungen der Erfindung können den übrigen Unteransprüchen entnommen werden.

Ausführungsbeispiele der vorliegenden Erfindung werden anhand einer Zeichnung näher erläutert. Dabei zeigen:
- Figur 1: in schematischer Darstellung die Zuordnung von Teilnehmerleitungen zu Transportleitungen;
- Figur 2: in schematischer Darstellung ein erstes Verfahren zur Zuordnung von Teilnehmerleitungen zu Transportleitungen;
- Figur 3: in schematischer Darstellung ein zweites Verfahren zur Zuordnung von Teilnehmerleitungen zu Transportleitungen;
- Figur 4: in schematischer Darstellung ein drittes Verfahren zur Zuordnung von Teilnehmerleitungen zu Transportleitungen;
- Figur 5: einen Verlauf des Gesamtgewichts in Abhängigkeit von dem für die Anzahl zugewiesener Teilnehmerleitungen ermittelten Teilgewicht und von dem für die Datenrate ermittelten Teilgewicht mit einer linearen Gewichtung der Datenrate;
- Figur 6: einen Verlauf des Gesamtgewichts in Abhängigkeit von dem für die Anzahl zugewiesener Teilnehmerleitungen ermittelten Teilgewicht und von dem für die Datenrate ermittelten Teilgewicht mit einer quadratischen Gewichtung der Datenrate; und
- Figur 7: in schematischer Darstellung den Aufbau eines Controllers im Brückenbaustein.

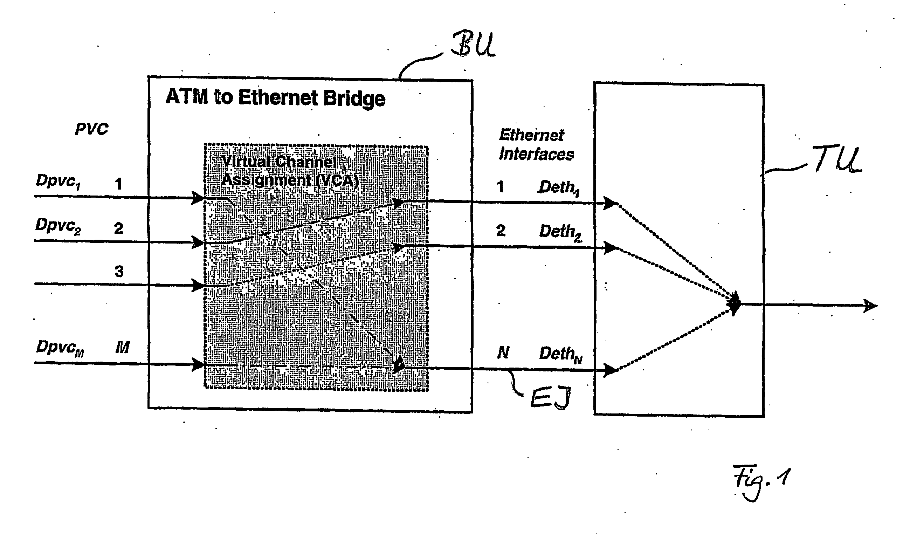

Figur 1 zeigt in schematischer Darstellung eine Anzahl von M Teilnehmerverbindungen PVC (Permanent Virtual Connection), die in einem Brückenbaustein BU mit einem Zuordnungsverfahren (sogenanntes Virtual Channel Assignment VCA) einer Anzahl von N Transportverbindungen EI zugewiesenen werden, bevor der über die Transportverbindungen EI abgewickelte Datenverkehr mit einem Übertragungsbaustein TU in ein hier nicht weiter dargestelltes Backbone-Kommunikationsnetzwerk eingespeist wird. Im vorliegenden Ausführungsbeispiel sind die teilnehmerseitig angeordneten Datenverbindungen, hier die Teilnehmerverbindungen PVC, nach dem AAL5 Protokoll arbeitende paketorientierte ATM Verbindungen. Die transportseitig angeordneten Datenverbindungen, hier die Transportverbindungen EI, sind nach dem Ethernet-Standard IEEE802.3 arbeitende Ethernet-Interfaces. Der Brückenbaustein BU ist eine sogenannte ATM to Ethernet Bridge, in welcher u.a. zum einen die Zuordnung der Teilnehmerverbindungen PVC zu den Transportverbindungen EI vorgenommen und zum anderen die Entpackung der Ethernet Rahmen aus den ATM/AAL5 Rahmen in Upstream Richtung und die Verpackung der Ethernet Rahmen in ATM/AAL5 Rahmen in Downstream Richtung vorgenommen wird. Die über die Ethernet Interfaces abgewickelte Datenrate wird hier mit einem sogenannten Aggregation Router in ein nach IP Standard arbeitendes Backbone Netzwerk übertragen.

Grundsätzlich ist das erfindungsgemässe Zuordnungsverfahren so ausgestaltet, dass die upstream Datenlast der M ATM Teilnehmerverbindungen PVC möglichst gleichmässig auf die N verfügbaren Ethernet Interfaces EI verteilt wird. Dabei werden Betriebszustände vermieden, in denen einzelne Schnittstellen in Überlastzustände geraten, während andere möglicherweise nur in Teillast betrieben werden. Weiter stellt das Zuordnungsverfahren sicher, dass im Fall des Ausfalls eines Ethernet Interfaces die diesem Ethernet Interface EI zugeordneten Teilnehmerverbindungen PVC auf die verbleibenden aktiven Ethernet Interfaces EI umrangiert werden. Und weiter werden nach einer Reaktivierung eines deaktivierten Ethernet Interfaces EI die Teilnehmerverbindungen PVC, die den übrigen Ethernet Interfaces zugeordnet worden sind, zum Teil auf das reaktivierte Ethernet Interface EI umgelenkt, damit im Ergebnis wieder eine gleichmässige Lastverteilung über alle Ethernet Interfaces EI erzielt ist.

Eine erste Ausführungsform für das erfindungsgemässe Zuordnungsverfahren ist schematisch in Figur 2 gezeigt. Für jedes Ethernet Interface EI wird softwaremässig ein Zähler implementiert, der die Anzahl Zpvcₙ der aktuell einem Ethernet Interface EI zugeordneten Teilnehmerverbindungen PVC erfasst. Dabei wird nun für jedes Ethernet Interface EI ein Gewichtungswert Gpvcₙ bestimmt, der im vorliegenden Fall der Anzahl der zugeordneten Teilnehmerverbindungen PVC entspricht, d.h. Gpvcₙ = Zpvcₙ. Falls alle Ethernet Interfaces EI gleich gewichtet sind, erfolgt die Zuordnung einer weiteren Teilnehmerverbindung PVC an das Ethernet Interface EI mit dem kleinsten Zählindex n. Falls ein Ethernet Interface EI ausfällt, werden die ihr zugeordneten Teilnehmerverbindungen PVC auf die noch aktiven übrigen Ethernet Interfaces EI umverteilt, wobei deren aktuelles Gewicht Gpvcₙ entsprechend berücksichtigt wird. Wird nun im umgekehrten Fall ein deaktiviertes Ethernet Interface EI reaktiviert, so werden Teilnehmerverbindungen PVC von den Ethernet Interfaces EI mit den aktuell höchsten Gewichtungswerten Gpvcₙ auf dieses "neue" reaktivierte Ethernet Interface umgelenkt, bis für alle aktiven Ethernet Interfaces EI wieder möglichst gleichmässige Gewichtungswerte Gpvcₙ erzielt sind.

Mit dieser ersten Ausführungsform wird daher sichergestellt, dass bei Anwendungen mit einer einheitlichen zulässigen maximalen Datenrate Dpvc-maxₘ je Teilnehmerverbindung im Mittel eine gleichmässige maximale Auslastung der N Ethernet Interfaces erzielt wird. Diese Ausführungsform berücksichtigt jedoch nicht die tatsächliche Auslastung Dethₙ der Ethernet Interfaces EI zum Zeitpunkt der Neuanlage einer Teilnehmerverbindung, die administrativ erzeugt oder auch gelöscht werden kann. Diese Ausführungsform kann daher die unvorteilhafte Konsequenz nach sich ziehen, dass es aufgrund der jeweils unterschiedlichen Ausnutzung der möglichen maximal zulässigen Datenrate Dpvc-maxₘ durch die Teilnehmer zu einem Ungleichgewicht bei der Lastverteilung auf die verfügbaren Ethernet Interfaces EI kommt. An diesem Punkt setzt nun die zweite nachfolgend beschriebene Ausführungsform an.

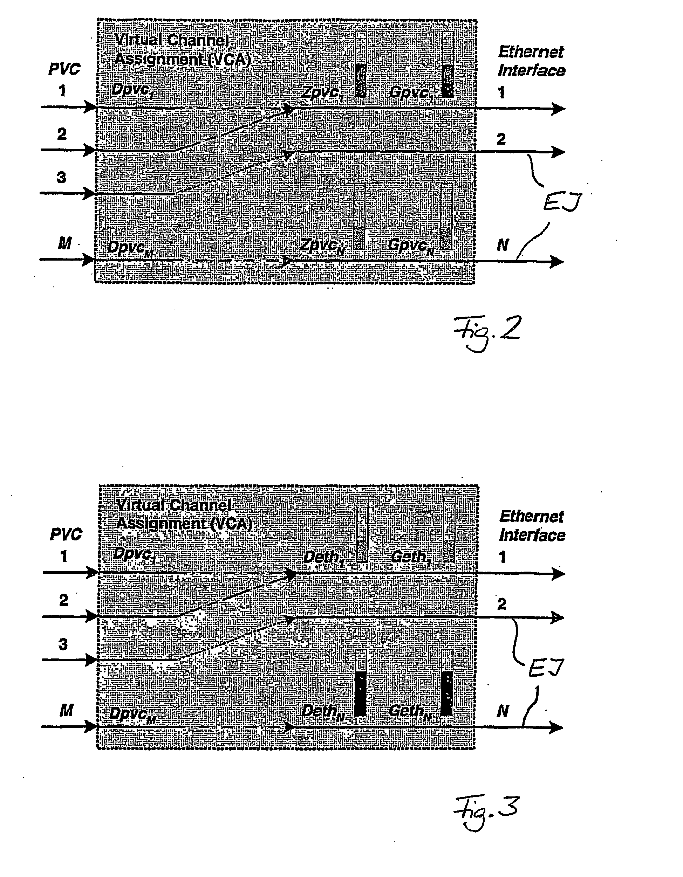

Das in Figur 3 schematisch dargestellte Zuordnungsverfahren stellt eine zweite Ausführungsform der Erfindung dar, bei der für jedes Ethernet Interface EI softwaremässig ein Zähler für die gesendeten Bytes implementiert wird, d.h. die gesendeten Ethernet Rahmen und deren jeweilige Länge werden durch den Zähler erfasst. Weiter wird softwaremässig ein Verfahren durchgeführt, bei dem diese Zähler zyklisch abgefragt werden und basierend auf der Länge des Abfrageintervalls und der im Abfrageintervall gesendeten Bytes eine mittlere Datenrate Dethₙ je Ethernet Interface EI im zurückliegenden Abfrageintervall ermittelt wird. Danach ergibt sich die folgende weitere Vorgehensweise:

Für jedes Ethernet Interface EI liefert damit ihre mittleren Datenrate Dethₙ im letzten Abfrageintervall den Beitrag zur Bildung eines lastabhängigen Gewichtungswertes Gethₙ, der sinnvollerweise mit einem Skalierungswert Dscal skaliert und normiert wird. Dscal nimmt damit Werte aus einem Intervall von >0 kBit/s bis Deth-max an, wobei Deth-max die maximal über ein Ethernet Interface transportierbare Datenrate ist. Im laufenden Betrieb wird daher eine neue Teilnehmerverbindung PVCₘ dem Ethernet Interface EI mit dem geringsten Gewichtungswert Gethₙ zugeordnet. Sind dabei alle Ethernet Interface EI annähernd gleich gewichtet, erfolgt die Zuordnung zum Ethernet Interface EI mit dem kleinsten Index n.

Für den Fall einer Reaktivierung eines deaktivierten Ethernet Interfaces EI ist weiter eine Möglichkeit vorgesehen, das auf die bereits aktiven Ethernet Interfaces verteilte Datenvolumen zum Teil auf das reaktivierte Ethernet Interface umzuverteilen, so dass im Anschluss daran wieder eine gleichmässige Gewichtung/Belastung aller nun aktiven Ethernet Interfaces EI erreicht wird. Dazu wird auch für alle Teilnehmerverbindungen PVC ein Zähler für die gesendeten Bytes implementiert. Für ATM Verbindungen kann dies heissen, dass nach einem erfolgten Reassembly der AAL5 Rahmen ausschliesslich die Bytes der Ethernet Rahmen erfasst werden. Auch diese Zähler werden zyklisch abgefragt und basierend auf der Länge des Abfrageintervalls und der im Abfrageintervall gesendeten Bytes wird die mittlere Datenrate Dpvcₘ je Teilnehmerverbindung PVC im zurückliegenden Abfrageintervall ermittelt. Wird nun also ein deaktiviertes Ethernet Interface EI wieder reaktiviert, so werden von den bis dahin bereits aktiven Ethernet Interfaces EI nacheinander Teilnehmerverbindungen PVC, deren mittlere Datenraten Dpvcₘ ja bekannt sind, auf das reaktivierte Ethernet Interface EI umrangiert, bis deren Gewichtungswert Gethₙ auf den neuen nun mehr erreichten mittleren Gewichtungswert angewachsen ist. Gleichzeitig wird bei diesem Zuordnungsverfahren jedoch auch sichergestellt, dass die Gewichtungswerte der so entlasteten ursprünglich aktiven Ethernet Interfaces EI jeweils nicht unter den mittleren Gewichtungswert aller in Betrieb befindlichen Ethernet Interface EI abfallen.

Mit Bezug auf die Figur 3 ist dort beispielhaft gezeigt, dass die Teilnehmerverbindung PVC₂ dem Ethernet Interface EI₁ zugeordnet wird und nicht beispielsweise dem Ethernet Interface EIN zugeordnet wird, welches bereits durch die Zuordnung der Teilnehmerverbindung PVC_{M} einen höheren Gewichtungswert Geth_{N} aufweist als das Ethernet Interface EI₁ mit seinem Gewichtungswert Geth₁.

Mit diesem Lösungsansatz wird auf jeden Fall immer dann eine gleichmässige Auslastung der Ethernet Interfaces EI erzielt, wenn die Teilnehmerverbindungen mehr oder weniger kontinuierliche Datenströme liefern. Eine neu anzulegenden Teilnehmerverbindung PVC wird daher stets dem Ethernet Interface EI zugeordnet, welches aktuell den kleinsten Gewichtungswert Gethₙ aufweist. Ein gewisser Nachteil kann sich bei diesem Lösungsansatz jedoch ergeben, wenn beim Anlegen einer neuen Teilnehmerverbindung PVCₘ keine der bereits dem Ethernet Interface EI mit dem aktuell geringsten Gewichtungswert zugeordneten Teilnehmerverbindungen PVC Daten in Richtung zum Backbone Netzwerk übermittelt. Neu anzulegenden Teilnehmerverbindungen würden daher gemäss diesem Lösungsansatz immer an das Ethernet Interface EI₁ mit dem kleinsten Gewichtungswert zugeordnet, oder, wenn alle Ethernet Interfaces EI aktuell den Gewichtungswert Gethₙ = 0 aufweisen, dem Ethernet Interface EI mit dem kleinsten Zählindex. Ein anschliessend auf den Teilnehmerverbindungen PVC einsetzender Datenstrom könnte dann unvermittelt zu einer Überlastung eines oder mehrerer der Ethernet Interfaces EI führen.

Ein drittes erfindungsgemässes Zuordnungsverfahren stellt letztendlich eine Kombination der beiden vorangehend vorgestellten Lösungen dar, wodurch die Vorteile der beiden einzelnen Lösungen erhalten, aber deren nachteilige Wirkungen vermieden werden können. Kernbestandteil dieses dritten Verfahrens ist daher die Bildung eines Produktgewichts Gₙ, welches aus den beiden Gewichtungswerten Gpvcₙ und Gethₙ gebildet wird. Um dabei das "Fehlverhalten" des zweiten Lösungsansatzes für den Fall Dethₙ = 0 sicher auszuschliessen, wird ein minimaler lastabhängiger Gewichtungswert Geth-min > 0 festgelegt, um so das "Gefahrenpotential" inaktiver Teilnehmerverbindungen PVC absichern zu können. Für die Zuordnung einer neuen Teilnehmerverbindung PVC zu einem Ethernet Interface EI wird auf diese Weise sichergestellt, dass die potenziell mögliche Datenlast aufgrund der bereits zugewiesenen Teilnehmerverbindungen PVC als auch die aktuelle Datenlast in adäquater Weise für die Zuordnung berücksichtigt werden kann.

Besonders bei Anwendungen, bei denen die Summe der maximal möglichen Datenrate Σ Dpvc-maxₘ der Teilnehmerverbindungen PVCₘ, 1 ≤ m ≤ M, grösser ist als die Summe der maximal möglichen Datenraten ∑ Deth-maxₙ der Ethernet Interfaces EIₙ, 1 ≤ n ≤ N, muss hinsichtlich der Zuordnungsstrategie eine entsprechend grösseres Augenmerk auf die jeweils aktuelle Auslastung der Ethernet Interfaces EI gelegt werden. Aus diesem Grunde wird, besonders bei diesen Anwendungen, der lastabhängige Anteil Gethₙ am Produktgewicht Gₙ stärker betont. Eine diesbezügliche Betonung kann es vorsehen, dass das lastabhängige Anteil Gethₙ quadratisch in das Gesamtgewicht Gₙ eingeht. Es könnte aber auch eine feste lineare Gewichtung von 2/3 zu 1/3 zugunsten des lastabhängigen Gewichtungswertes Gethₙ gegenüber dem rein anzahlmässigen Gewichtungswert Gpvcₙ vorgesehen sein.

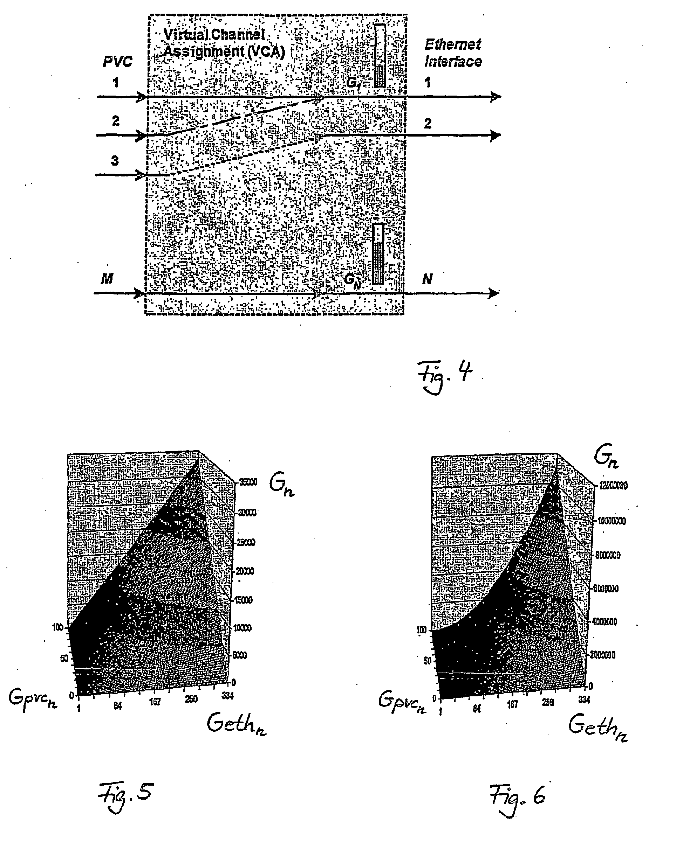

Die sich aus diesem Lösungsansatz ergebenden Zuordnungsvorschriften haben daher vom Aufbau her eine ähnliche Struktur wie die Zuordnungsvorschriften für die beiden vorangegangenen Zuordnungsverfahren. Eine neu anzulegende Teilnehmerverbindung PVCₘ wird dem Ethernet Interface EIₙ mit dem geringsten Produktgewicht Gₙ zugeordnet, was Figur 4 für die Zuordnung der Teilnehmerverbindung PVC₂ zum Ethernet Interface EI₁ beispielhaft darstellt. Sind alle Ethernet Interfaces EI mit etwa dem gleichen Produktgewicht Gₙ "belastet", erfolgt die Zuweisung an das Ethernet Interface EI₁ mit dem kleinsten Zählindex n. Fällt nun ein Ethernet Interface EI aus, werden die ihm zugeordneten Teilnehmerverbindung PVC auf die übrigen aktiven Ethernet Schnittstellen EI umverteilt, wobei deren aktuelles Produktgewicht Gₙ entsprechend berücksichtigt wird. Im umgekehrten Fall eines hinzutretenden Ethernet Interfaces EI werden von den bis anhin aktiven Ethernet Interfaces Teilnehmerverbindungen PVC auf dieses neue Ethernet Interface umrangiert, bis deren Gewicht bis auf das nun gültige mittlere Produktgewicht aller Ethernet Interfaces angewachsen ist. Gleichzeitig wird sichergestellt, dass das Produktgewicht Gₙ der nun mehr entlasteten Ethernet Interfaces nicht unter dieses mittlere Produktgewicht absinkt.

Die Graphen gemäss den Figuren 5 und 6 zeigen den Verlauf für das Produktgewicht Gₙ in Abhängigkeit von dem anzahlmässigen Gewichtungswert Gpvcₙ und dem datenratenabhängigen Gewichtungswert Gethₙ, wobei die Figur 5 den Zusammenhang für eine lineare Gewichtung der Datenrate und die Figur 6 den Zusammenhang für eine quadratische Gewichtung der Datenrate angeben. Für den anzahlmässigen Gewichtungswert Gpvcₙ wird dabei ein maximaler Wert von 100 (M=100) und für den datenratenabhängigen Gewichtungswert Gethₙ ein maximales Gewicht von 333 (Deth-max = 100Mbit/s; Dscal = 300 kbit/s) angesetzt.

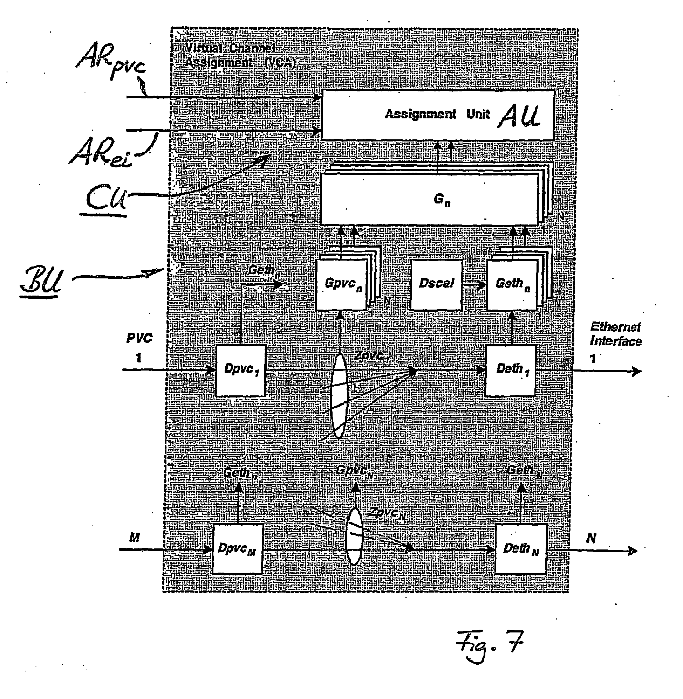

Figur 7 zeigt in schematischer Darstellung den Aufbau einer Controllerbaugruppe CU für die Zuordnung der Teilnehmerverbindungen PVC zu den Ethernet Interfaces EI im Brückenbaustein BU. Das Verfahren der Zuordnung wird auch als Virtual Channel Assignment (VCA) bezeichnet. Auf einer derartigen Controllerbaugruppe CU werden üblicherweise zwei Prozessoren betrieben. Der Hauptprozessor ist zuständig für die Aufgaben der Organisation, der Administration und des Managements (sog. OAM Aufgaben) im Gesamtsystem und zur Steuerung eines Slave Prozessors, eines sogenannten Network Prozessors, der im weitesten Sinn für die Brückenfunktionen, hier "ATM to Ethernet Bridging", eingesetzt wird. Eine derartige Controllerbaugruppe CU ermöglicht es, bis zu M = 4095 ATM Teilnehmerverbindungen PVC anzulegen, die jeweils einer der N = 4 verfügbaren 100Base-T Ethernet Interfaces EI zuzuordnen sind.

Für die Aufgabe der Verbindungszuordnung können daher die voranstehend beschriebenen Verfahren genutzt werden. In der Darstellung nach Fig. 7 wird schematisch das dritte Zuordnungsverfahren angedeutet, weil sowohl der anzahlmässige Gewichtungswert Gpvcₙ als auch der datenratenabhängige Gewichtungswert Gethₙ in die Bestimmung des Produktgewichts Gₙ eines Ethernet Interfaces EIₙ eingehen. In einer Assignment Unit AU des Controllerbausteins CU werden neue Anfragen AR_{pvc} für das Anlegen neuer teilnehmerseitigen Datenverbindungen und Anfragen ARₑᵢ zur Re-/De-Aktivierung von Ethernet Interfaces EI administriert und die Zuordnung der Teilnehmerverbindungen PVC bzw. der Ethernet Interfaces EI entsprechend den voranstehend beschriebenen Verfahren vorgenommen.

## Patentansprüche

1. Verfahren zur Zuordnung einer Anzahl von M teilnehmerseitig angeordneten Datenverbindungen (PVC), insbesondere ATM-Verbindungen, zu einer Anzahl von N transportseitig angeordneten Datenverbindungen (EI), insbesondere Ethernet Interfaces, bei dem:
a) jede der M teilnehmerseitig angeordneten Datenverbindungen (PVC) anfänglich einer der N transportseitig angeordneten Datenverbindungen (EI) zugewiesen wird; **dadurch gekennzeichnet, dass**
b) für jede der N transportseitig angeordneten Datenverbindungen (EI) dynamisch ein deren Auslastung repräsentierender Gewichtungswert (Gₙ, Gpvcₙ, Gethₙ) bestimmt wird, wobei der Gewichtungswert (Gₙ, Gpvcₙ, Gethₙ) aus der Anzahl (Zpvcₙ) der zugewiesenen teilnehmerseitig angeordneten Datenverbindungen (PVC) und/oder der aktuell über die transportseitig angeordnete Datenverbindung (EI) abgewickelten Datenlast (Dethₙ) berechnet wird; und
c) die bereits zugewiesenen und/oder neuen teilnehmerseitig angeordneten Datenverbindungen (PVC) in Abhängigkeit von den Gewichtungswerten (Gₙ, Gpvcₙ, Gethₙ) auf die verfügbaren transportseitig angeordneten Datenverbindungen (EI) zugewiesen werden.

2. Verfahren nach Anspruch 1,
**dadurch gekennzeichnet, dass**
zur Berechnung des Gewichtungswertes (Gₙ, Gpvcₙ, Gethₙ) die aktuelle Datenlast (Gethₙ) stärker betont wird als die theoretisch aufgrund der zugewiesenen Anzahl (Zpvcₙ) teilnehmerseitig angeordneter Verbindungen mögliche Last.

3. Verfahren nach Anspruch 2,
**dadurch gekennzeichnet, dass**
die aktuelle Datenlast (Dethₙ) quadratisch in den Gewichtungswert (Gₙ, Gethₙ) eingeht.

4. Verfahren nach einem der Ansprüche 1 bis 3,
**dadurch gekennzeichnet, dass**
eine neu anzulegende teilnehmerseitig angeordnete Datenverbindung (PVC) der transportseitig angeordneten Datenverbindung (EI) zugewiesen wird, welche den geringsten Gewichtungswert (Gₙ, Gpvcₙ, Gethₙ) aufweist.

5. Verfahren nach einem der Ansprüche 1 bis 4,
**dadurch gekennzeichnet, dass**
bei Ausfall einer transportseitig angeordneten Datenverbindung (EI) eine Umverteilung der dieser ausgefallenen Datenverbindung zugewiesenen teilnehmerseitig angeordneten Datenverbindungen (PVC) in Abhängigkeit der für die verbleibenden transportseitig angeordneten Datenverbindungen (EI) berechneten Gewichtungswerte (Gₙ, Gpvcₙ, Gethₙ) vorgenommen wird.

6. Verfahren nach einem der Ansprüche 1 bis 5,
**dadurch gekennzeichnet, dass**
bei Hinzutreten einer transportseitig angeordneten Datenverbindung (EI) eine teilweise Umverteilung der den bisher verfügbaren transportseitig angeordneten Datenverbindungen (EI) zugewiesenen teilnehmerseitig angeordneten Datenverbindungen (PVC) in Abhängigkeit der für die transportseitig angeordneten Datenverbindungen (EI) berechneten Gewichtungswerte (Gₙ, Gpvcₙ, Gethₙ) vorgenommen wird.

7. Verfahren nach einem der Ansprüche 1 bis 6,
**dadurch gekennzeichnet, dass**
sich der Gewichtungswert (Gₙ, Gpvcₙ) hinsichtlich der einer transportseitig angeordneten Datenverbindung (EI) zugewiesenen teilnehmerseitig angeordneten Datenverbindungen (PVC) linear mit der Anzahl der zugewiesenen teilnehmerseitig angeordneten Datenverbindungen (PVC) verhält.

8. Verfahren nach einem der Ansprüche 1 bis 7,
**dadurch gekennzeichnet, dass**
zur Berechnung des Gewichtungswerts (Gₙ, Gethₙ) hinsichtlich der über eine transportseitig angeordnete Datenverbindung (EI) abgewickelte Datenlast (Dethₙ) eine normierte zeitlich gemittelte Datenrate mit einer vorbestimmbaren Länge eines zurückliegenden Abfrageintervalls bestimmt wird.

9. Verfahren nach Anspruch 7 oder 8,
**dadurch gekennzeichnet, dass**
zur Berechnung des Gewichtungswerts (Gₙ, Gpvcₙ, Gethₙ) hinsichtlich der über eine transportseitig angeordnete Datenverbindung (EI) abgewickelten Datenlast (Dethₙ) für eine aktuell nicht-benutzte teilnehmerseitig angeordnete Datenverbindung (PVC) ein von Null verschiedener unterer Gewichtungsbeitrag zum Gewichtungswert (Gₙ, Gpvcₙ, Gethₙ) gesetzt wird.

10. Verfahren nach einem der Ansprüche 7 bis 9,
**dadurch gekennzeichnet, dass**
ein hinsichtlich der über eine transportseitig angeordnete Datenverbindung (EI) abgewickelten Datenlast (Dethₙ) ermittelte Beitrag (Gethₙ) zum Gewichtungswert (Gₙ) und der hinsichtlich der Anzahl (Zpvcₙ) der einer transportseitig angeordneten Datenverbindung (EI) zugewiesenen teilnehmerseitig angeordneten Datenverbindungen (PVC) ermittelte Beitrag (GpvCₙ) zum Gewichtungswert (Gₙ) mit unterschiedlichem Gewicht in die Ermittlung des Gewichtungswertes (Gₙ) eingehen.

## Claims

1. Method for assigning a number of M data connections (PVC) arranged on the subscriber side, in particular ATM connections, to a number of N data connections (EI) arranged on the transport side, in particular Ethernet interfaces, in which;
a) each of the M data connections (PVC) arranged on the subscriber side is initially allocated to one of the N data connections (EI) arranged on the transport side, **characterised in that**
b) for each of the N data connections (EI) arranged on the transport side, a weighting value (G*ₙ*, Gpvc*ₙ*, Geth*ₙ*) representing the load thereof is dynamically determined, with the weighting value (G*ₙ*, Gpvc*ₙ*, Geth*ₙ*) being calculated from the number (Zpvc*ₙ*) of the allocated data connections (PVC) arranged on the subscriber side and/or the data load (Deth*ₙ*) currently processed by way of the data connection (EI) arranged on the transport side; and
c) the already allocated and/or new data connections (PVC) arranged on the subscriber side are allocated to the available data connections (EI) arranged on the transport side as a function of the weighting values (G*ₙ*, Gpvc*ₙ*, Geth*ₙ*).

2. Method according to claim 1,
**characterised in that**
in order to calculate the weighting value (G*ₙ*, Gpvc*ₙ*, Geth*ₙ*), the current data load (Geth*ₙ*) is emphasised more significantly than the load which is theoretically possible by virtue of the allocated number (Zpvc*ₙ*) of connections arranged on the subscriber side.

3. Method according to claim 2,
**characterised in that**
the current data load (Deth*ₙ*) enters quadratically into the weighting value (G*ₙ*, Geth*ₙ*).

4. Method according to one of claims 1 to 3,
**characterised in that**
a new data connection (PVC) which is arranged on the subscriber side and is to be installed is allocated to the data connection (EI) arranged on the transport side, which comprises the lowest weighting value (G*ₙ*, Gpvc*ₙ*, Geth*ₙ*).

5. Method according to one of claims 1 to 4,
**characterised in that**
if a data connection (EI) arranged on the transport side fails, the data connections (PVC) arranged on the subscriber side and allocated to this failed data connection are reallocated as a function of the weighting values (G*ₙ,* Gpvc*ₙ*, Geth*ₙ*) calculated for the remaining data connections (EI) arranged on the transport side.

6. Method according to one of claims 1 to 5,
**characterised in that**
with the appearance of a data connection (EI) arranged on the transport side, the data connections (PVC) arranged on the subscriber side and allocated to the previously available data connections (EI) arranged on the transport side are partially reallocated as a function of the weighting values (G*ₙ*, Gpvc*ₙ*, Geth*ₙ*) calculated for the data connections (EI) arranged on the transport side.

7. Method according to one of claims 1 to 6,
**characterised in that**
the weighting value (G*ₙ*, Gpvc*ₙ*) in respect of the data connections (PVC) arranged on the subscriber side and assigned to a data connection (EI) arranged on the transport side, behaves in a linear fashion with the number of allocated data connections (PVC) arranged on the subscriber side.

8. Method according to one of claims 1 to 7, **characterised in that** in order to calculate the weighting value (G*ₙ*, Geth*ₙ*) in respect of the data load (Deth*ₙ*) processed by way of a data connection (EI) arranged on the transport side, a standardised temporally average data rate is determined with a predeterminable length of a previous polling interval.

9. Method according to claim 7 or 8,
**characterised in that**
in order to calculate the weighting value (G*ₙ*, Gpvc*ₙ*, Geth*ₙ*) in respect of the data load (Deth*ₙ*) processed by way of a data connection (EI) arranged on the transport side for a currently unused data connection (PVC) arranged on the subscriber side, a lower weighting contribution which differs from zero is set as the weighting value (G*ₙ*, Gpvc*ₙ*, Geth*ₙ*).

10. Method according to one of claims 7 to 9,
**characterised in that**
a contribution (Geth*ₙ*) determined in respect of the data load (Deth*ₙ*) processed by way of a data connection (EI) arranged on the transport side and the contribution (Gpvc*ₙ*) determined in respect of the number (Zpvc*ₙ*) of data connections (PVC) arranged on the subscriber side and allocated to a data connection (EI) arranged on the subscriber side are included with a different weighting in the determination of the weighting value (G*ₙ*).

## Revendications

1. Procédé d'affectation d'un nombre de M liaisons (PVC) de données côté abonné, notamment de liaisons ATM, à un nombre de N liaisons (EI) de données côté transport, notamment d'interfaces Ethernet, dans lequel :
a) on attribue à chacune des M liaisons (PVC) de données côté abonné initialement l'une des N liaisons (EI) de données côté transport : **caractérisé en ce que**
b) pour chacune des N liaisons (EI) de données côté transport, on détermine dynamiquement une valeur (Gₙ, Gpvcₙ, Gethₙ) de pondération en représentant le degré d'utilisation, la valeur (Gₙ, Gpvcₙ, Gethₙ) de pondération étant calculée à partir du nombre (Zpvcₙ) des liaisons (PVC) de données assignées côté abonné et/ou de la charge (Dethₙ) de données développées actuellement par la liaison (EI) de données côté transport ; et
c) on assigne les liaisons (PVC) de données déjà assignées et/ou nouvelles côté abonné en fonction des valeurs ((Gₙ, Gpvcₙ, Gethₙ) de pondération aux liaisons (EI) de données disponibles côté transport.

2. Procédé suivant la revendication 1,
**caractérisé en ce que**
pour calculer la valeur ((Gₙ, Gpvcₙ, Gethₙ) de pondération on insiste plus fortement sur la charge (Gethₙ) de données actuelles que sur la charge possible théoriquement sur la base du nombre (Zpvcₙ) assigné de liaisons côté abonné.

3. Procédé suivant la revendication 2,
**caractérisé en ce que**
la charge (Dethₙ) actuelle de données entre au carré dans la valeur (Gₙ, Gethₙ) de pondération.

4. Procédé suivant l'une des revendications 1 à 3,
**caractérisé en ce que**
l'on assigne une nouvelle liaison (PVC) de données à appliquer côté abonné à la liaison (EI) de données côté transport qui a la valeur (Gₙ, Gpvcₙ, Gethₙ) de pondération la plus petite.

5. Procédé suivant l'une des revendications 1 à 4,
**caractérisé en ce que**
si une liaison (EI) de données côté transport est défaillante, on effectue une re-répartition des liaisons (PVC) de données côté abonné assignées à cette liaison de données défaillante en fonction des valeurs (Gₙ, Gpvcₙ, Gethₙ) de pondération calculées pour les liaisons (EI) de données restantes côté transport.

6. Procédé suivant l'une des revendications 1 à 5,
**caractérisé en ce que**
lors de l'adjonction d'une liaison (EI) de données côté transport, on effectue une re-répartition partielle des liaisons (PVC) de données côté abonné assignées aux liaisons (EI) de données côté transport disponibles jusqu'ici en fonction des valeurs (Gₙ, Gpvcₙ, Gethₙ) de pondération calculées pour les liaisons (EI) de données côté transport.

7. Procédé suivant l'une des revendications 1 à 6,
**caractérisé en ce que**
la valeur (Gₙ, Gpvcₙ) de pondération concernant les liaisons (PVC) de données côté abonné assignées à une liaison (EI) de données côté transport varie linéairement avec le nombre des liaisons (PVC) de données côté abonné qui sont assignées.

8. Procédé suivant l'une des revendications 1 à 7,
**caractérisé en ce que**
pour calculer la valeur (Gₙ, Gethₙ) de pondération en ce qui concerne la charge (Dethₙ) de données développée sur une ligne (EI') de données côté transport, on détermine un débit de données normé et moyenné dans le temps avec une longueur pouvant être déterminée à l'avance d'un intervalle d'interrogation parcouru.

9. Procédé suivant la revendication 7 ou 8,
**caractérisé en ce que**
pour calculer la valeur (Gₙ, Gpvcₙ, Gethₙ) de pondération en ce qui concerne la charge (Dethₙ) de données développée sur une liaison (EI) de données côté transport pour une liaison (PVC) de données côté abonné, actuellement inutilisée, on met pour la valeur (Gₙ, Gpvcₙ, Gethₙ) de pondération une contribution de pondération inférieure différente de zéro.

10. Procédé suivant l'une des revendications 7 à 9,
**caractérisé en ce que**
une contribution (Gethₙ) à la valeur (Gₙ) de pondération, déterminée pour ce qui concerne la charge (Dethₙ) de données développée sur une ligne (EI) de données côté transport et la contribution (Gpvcₙ) à la valeur (Gₙ) de pondération, déterminée en ce qui concerne le nombre (Zpvcₙ) des liaisons (PVC) de données côté abonné assignées à une liaison (EI) de données côté transport, entrent avec un poids différent dans la détermination de la valeur (Gₙ) de pondération.
